(19) Europäisches Patentamt
European Patent Office
Office européen des brevets

(11) Veröffentlichungsnummer: **0 351 618 B1**

(12) **EUROPÄISCHE PATENTSCHRIFT**

(45) Veröffentlichungstag der Patentschrift: **02.02.94**

(51) Int. Cl.$^5$: **C08G 18/54**, C09D 5/44

(21) Anmeldenummer: **89112044.6**

(22) Anmeldetag: **01.07.89**

(54) **Wärmeaktives Vernetzungsmittel für Lackharz-Bindemittel.**

(30) Priorität: **19.07.88 DE 3824416**

(43) Veröffentlichungstag der Anmeldung:
**24.01.90 Patentblatt 90/04**

(45) Bekanntmachung des Hinweises auf die Patenterteilung:
**02.02.94 Patentblatt 94/05**

(84) Benannte Vertragsstaaten:
**AT BE CH DE ES FR GB IT LI NL SE**

(56) Entgegenhaltungen:
**EP-A- 0 167 029**
**EP-A- 0 267 532**
**DE-A- 2 755 907**

(73) Patentinhaber: **BASF Lacke + Farben AG**
**Glasuritstrasse 1**
**D-48165 Münster-Hiltrup(DE)**

(72) Erfinder: **Lawrenz, Dirk, Dr.**
**Moerkeistrasse 3**
**D-7257 Ditzingen 4(DE)**
Erfinder: **Schupp, Hans, Dr.**
**Jean-Voelker-Strasse 40**
**D-6520 Worms 1(DE)**
Erfinder: **Schwerzel, Thomas, Dr.**
**Budapester Strasse 51**
**D-6700 Ludwigshafen(DE)**
Erfinder: **Oslowski, Hans-Josef, Dr.**
**Heinrichstrasse 5**
**D-4400 Münster(DE)**
Erfinder: **Heimann, Ulrich, Dr.**
**Schlagholz 28**
**D-4400 Münster(DE)**

(74) Vertreter: **Langfinger, Klaus-Dieter, Dr. et al**
**BASF Aktiengesellschaft,**
**Patentabteilung ZDX - C 6**
**D-67056 Ludwigshafen (DE)**

EP 0 351 618 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Isocyanat-modifizierte wärmereaktive Vernetzungsmittel auf der Basis phenolischer Mannichbasen für die Vernetzung von Lackharz-Bindemitteln. Derartige Vernetzungsmittel finden ihre Anwendung hauptsächlich in der kathodischen Elektrotauchlackierung. Die vorliegende Erfindung betrifft auch Überzugsmittel, die das beschriebene Vernetzungsmittel enthalten, sowie Gegenstände, die mit einem solchen Überzugsmittel beschichtet worden sind.

Wärmereaktive Vernetzungsmittel auf der Basis phenolischer Mannichbasen in Verbindung mit Lackharz-Bindemitteln sind bekannt. So wird in der EP-A 167 029 ein Bindemittel für die kathodische Elektrotauchlackierung beschrieben, das als Vernetzer eine phenolische Mannichbase enthält, hergestellt aus

a) einem oder mehreren mehrkernigen Polyphenolen,

b) Formaldehyd oder einer Formaldehyd-liefernden Verbindung und

c) einem oder mehreren sekundären aliphatischen Aminen.

Die hergestellten Lackfilme zeichnen sich allgemein nach dem Einbrennen durch einen guten Korrosionsschutz und durch einen guten Verlauf aus. Während des Einbrennvorganges beobachtet man jedoch, das als "Kantenflucht" bezeichnete Phänomen, daß sich der Lackfilm bedingt durch die Oberflächenspannung von den Kanten des beschichteten Werkstückes zurückzieht und dadurch nur eine ungenügende Schichtstärke ausbildet, die nicht ausreichend vor einer Kanten-Korrosion schützt.

Aufgabe der vorliegenden Erfindung war es, wärmereaktive Vernetzungsmittel für Lackharz-Bindemittel zu entwickeln, die den oben beschriebenen Nachteil nicht aufweisen. Überraschenderweise konnte dieser Nachteil dadurch behoben werden, daß die als Vernetzungsmittel angewandten phenolischen Mannichbasen durch eine Umsetzung mit Mono- und/oder Polyisocyanaten modifiziert wurden. Dabei konnte das Niveau der übrigen anwendungstechnischen Eigenschaften auf einem hohen Stand gehalten werden.

Gelöst wurde die Aufgabe somit durch ein wärmereaktives Vernetzungsmittel für Lackharz-Bindemittel auf der Basis von phenolischen Mannichbasen, erhältlich durch Umsetzung von

einem Äquivalent eines mehrkernigen Polyphenols mit

A) 0,5 bis 2 Äquivalenten Formaldehyd oder einer Formaldehyd-liefernden

B) Verbindung und

C) 0,5 bis 1 Äquivalent mindestens eines sekundären aliphatischen Amins,

Entfernung des Reaktionswassers und Umsetzung des entstandenen Reaktionsproduktes mit

D) 0,01 bis 1 Äquivalent einer mono- oder polyfunktionellen Isocyanatverbindung.

Ferner bezieht sich die vorliegende Erfindung auf die Verwendung dieser Vernetzungsmittel zur Herstellung wärmehärtbarer überzüge, insbesondere solche, die durch kathodische Elektrotauchlackierung auf elektrisch leitende Substrate aufgebracht wurden, sowie ferner auf so beschichtete Gegenstände.

Zu den einzelnen Aufbaukomponenten des wärmereaktiven Vernetzungsmittels ist folgendes auszuführen:

Als Polyphenole kommen Verbindungen mit mindestens zwei Phenolkernen in Betracht, die im Molekül mindestens zwei zu verschiedenen Hydroxylgruppen orthoständige Wasserstoffatome tragen, beispielsweise Verbindungen der allgemeinen Formel I

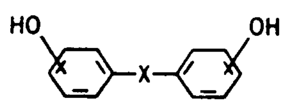

(I)

wobei die Hydroxylgruppen in ortho- oder para-Position stehen und X eine aliphatische Alkylengruppe mit 1 bis 3 C-Atomen oder $-SO_2-$, -SO-, -O- oder $-CH_2-NR-CH_2-$ mit R als $C_1$-$C_{16}$-Alkylrest ist; ein vorzugsweise verwendetes Polyphenol der allgemeinen Formel I ist Bisphenol A (2,2'-Bis-(4-hydroxyphenyl)-propan).

Weitere geeignete Polyphenole sind niedermolekulare Umsetzungsprodukte aus Phenolen und Formaldehyd, sogenannte Novolake.

Die Polyphenole können auch "in situ" aus Monophenolen und Formaldehyd erzeugt werden. Auch Umsetzungsprodukte aus Polyphenolen und Polyepoxiden können eingesetzt werden muß. Ein solches kettenverlängertes Polyphenol läßt sich z.B. herstellen aus 2 Mol Bisphenol A und einem Mol eines Diglycidylethers aus Bisphenol A und Epichlorhydin.

Als Komponente B) wird Formaldehyd oder Paraformaldehyd verwendet.

Als sekundäre aliphatische Amine (Komponente C) kommen im Prinzip alle Verbindungen dieses Typs in Betracht. Bevorzugt werden jedoch solche Amine, die eine gewisse Flüchtigkeit besitzen, z.B. solche, die

bei einem Druck von 1000 mbar einen Siedepunkt unterhalb von 250 °C haben. Besonders geeignete Amine sind beispielsweise Dialkylamine wie Dimethylamin, Diethylamin, Ethylpropylamin, Dipropylamin, Diisopropylamin, Dibutylamin, Diisobutylamin, Dipentylamin, Dihexylamin, Dicyclohexylamin, Morpholin, Piperidin sowie Gemische dieser Amine, aber auch Methylethanolamin und Ethylethanolamin.

Als Komponente D) können prinzipiell beliebige mono- und/oder polyfunktionelle Isocyanate verwendet werden. Die Isocyanate können ihrerseits wiederum andere Gruppierungen enthalten, die unter den Bedingungen der Umsetzung mit der Mannichbase nicht zu störenden Nebenreaktionen führen. Auch halbgeblockte Diisocyanate, die dann zunächst monofunktionell reagieren, können verwendet werden.

Als monofunktionelle Isocyanate können neben den schon erwähnten halbgeblockten Diisocyanaten auch aliphatische und/oder aromatische Verbindungen wie Methylisocyanat, Phenylisocyanat und Cyclohexylisocyanat verwendet werden.

Als geeignete polyfunktionelle Isocyanate sind zu nennen Toluylendiisocyanat, Hexamethylendiisocyanat, Isophorondiisocyanat, Trimethylhexamethylendiisocyanat, 4,4′-Diphenylmethandiisocyanat, Xylylendiisocyanat, trimerisiertes Hexamethylendiisocyanat, trimerisiertes Isophorondiisocyanat und kernhydrierte Derivate der aromatischen Diisocyanate. Weiterhin können geeignete polyfunktionelle Isocyanate durch Reaktion von Polyolen oder Polyaminen mit niedermolekularen Polyisocyanaten hergestellt werden. Auch Mischungen von polyfunktionellen Isocyanaten und/oder Mischungen von poly- und monofunktionellen Isocyanaten können verwendet werden. Bevorzugt werden Umsetzungsprodukte von Isophorondiisocyanat oder Toluylendiisocyanat mit Trimethylolpropan und Mischungen dieser polyfunktionellen Isocyanate mit den entsprechenden Diisocyanaten, mit Hexamethylendiisocyanat oder mit Diphenylmethandiisocyanat verwendet.

Vor der Umsetzung mit den Isocyanaten muß das bei der Herstellung der phenolischen Mannichbasen entstehende Reaktionswasser möglichst vollständig entfernt werden. Dies kann am einfachsten durch azeotrope Destilliation mit einem geeigneten Lösemittel, wie Toluol, geschehen.

Die Reaktionsbedingungen, unter denen die phenolischen Hydroxylgruppen und gegebenenfalls aliphatischen Hydroxylgruppen mit Isocyanaten umgesetzt werden, sowie gegebenenfalls mitzuverwendende geeignete Katalysatoren, sind dem Fachmann bekannt und bedürfen daher keiner weiteren Erläuterung.

Die Aufbaukomponenten werden in solchen Mengen miteinander umgesetzt, daß pro Äquivalent der Komponente (A) 0,5 bis 2, bevorzugt 0,8 bis 1,2 Äquivalente Formaldehyd oder einer Formaldehydliefernden Verbindung (B), 0,5 bis 1, bevorzugt 0,8 bis 1 Äquivalente eines sekundären Amins (C) und 0,01 bis 1, bevorzugt 0,1 bis 1, besonders bevorzugt 0,2 bis 0,5 Äquivalente einer Mono- und/oder Polyisocyanatverbindung (D) verwendet werden.

Die Vernetzungsmittel können zusammen mit beliebigen Lackharz-Bindemitteln, die aktiven Wasserstoff enthalten, verwendet werden, geeignete Lackharz-Bindemittel sind beispielsweise in der EP-A 167 029 beschrieben.

Wurden als Komponente (D) für die Herstellung des Vernetzungsmittels teilgeblockte Di- oder polyfunktionelle Isocyanate verwendet, kann das Vernetzungsmittel auch an solche Gruppen eines Lackharzes ankondensiert werden, die aktiven Wasserstoff aufweisen. Voraussetzung hierfür ist jedoch, daß die Blockierungskomponente des Diisocyanates schon bei relativ niedriger Temperatur abspaltbar ist, so daß noch keine Vernetzung über die Aminomethylgruppen eintritt. Auf diese Weise gelangt man zu selbstvernetzenden Harzen. Hier ist es oft sinnvoll, die Aminkomponente (C) so zu wählen, daß eine Vernetzungsreaktion über die Aminomethylgruppe erst bei wesentlich höheren Temperaturen eintritt.

Ein anderer Weg, um mit erfindungsgemäßen Vernetzungsmitteln zu selbstvernetzenden Lackharzen zu kommen, besteht darin, solche polyfunktionellen Isocyanate mit den phenolischen Mannichbasen umzusetzen, deren Isocyanatgruppen eine unterschiedliche Reaktivität aufweisen. Als geeignete Diisocyanate sind hier 2,4-Toluylendiisocyanat und Isophorondiisocyanat zu nennen. Durch geeignete Reaktionsbedingungen läßt sich die Reaktion mit den phenolischen Mannichbasen in der Weise steuern, daß zunächst bei der Herstellung des Vernetzungsmittels nur eine der beiden Isocyanatgruppen reagiert. Die verbleibende Isocyanatgruppe kann dann in einem weiteren Reaktionsschritt mit geeigneten Lackharzen zu einem selbstvernetzenden Produkt umgesetzt werden.

Wenn für die Verwendung des Vernetzungsmittels für selbstvernetzende Lackharze die Aminkomponente C) der phenolischen Mannichbase so gewählt wird, daß sie erst bei Temperaturen abspaltet, die unter normalen Einbrennbedingungen nicht erreicht werden, so geht die Vernetzungsaktivität verloren und die modifizierten phenolischen Mannichbasen wirken dann lediglich als Elastifizierungskomponente.

Zur Herstellung einer wäßrigen Dispersion für die kathodische Elektrotauchlackierung wird das Gemisch aus Vernetzungsmittel und Lackharz-Bindemittel mit einer anorganischen oder organischen Säure wie Ameisensäure, Essigsäure, Milchsäure oder Phosphorsäure versetzt und anschließend auf Verarbeitungskonzentration verdünnt. Man kann jedoch auch das Gemisch aus Vernetzungsmittel und Lackharz-Bindemittel langsam unter Rühren in angesäuertes Wasser einfließen lassen.

Zur Herstellung von kathodischen Elektrotauchlackbädern können der wäßrigen Dispersion noch andere Bindemittel, Pigmente sowie weitere bei der Elektrotauchlackierung übliche Hilfs- und Zusatzstoffe wie Füllstoffe, Korrosionsinhibitoren, Dispergierhilfsmittel, Entschäumer, Lösemittel oder auch weitere Harzkomponenten zugesetzt werden. Die Elektrotauchbäder besitzen üblicherweise einen Feststoffgehalt von 5 bis 30 Gew.%. Die Abscheidung erfolgt üblicherweise bei Temperaturen von 15 bis 40 °C, während einer Zeit von 1 bis 5 min. bei einer angelegten Spannung von 50 bis 500 Volt. Der zu beschichtende elektrisch leitende Körper, beispielsweise ein Kupfer-, Aluminium- oder Stahlblech, das gegebenenfalls chemisch vorbehandelt z.B. phosphatiert sein kann, wird dabei als Kathode geschaltet. Der abgeschiedene Film kann bei Temperaturen von 120 bis 200 °C, vorzugsweise 130 bis 180 °C innerhalb von 5 bis 45 min., vorzugsweise 10 bis 30 min. gehärtet werden.

Beispiele

Herstellung der Vernetzungsmittel

Vernetzungsmittel A1:

228 g Bisphenol A, 125 g eines Diglycidylethers von Bisphenol A und 0,2 g Triphenylphosphin wurden 1 Stunde auf 160 °C erhitzt. Nach dieser Zeit ließ sich kein Epoxid mehr nachweisen und es war ein kettenverlängertes Diphenol entstanden. Dazu wurden 136 g Toluol, 172 g Dibutylamin und 45 g Paraformaldehyd gegeben und 2 Stunden auf 80 °C erhitzt. Nach dieser Zeit wurde unter leichtem Vakuum das gebildete Reaktionswasser azeotrop abdestilliert. Das Produkt hatte einen Festkörpergehalt von 80 Gew.%. Bei 50 bis 60 °C wurden 38 g trimerisiertes Hexamethylendiisocyanat (0,2 mol NCO) und 0,5 g Dibutylzinndilaurat zugegeben und 2 Stunden bei dieser Temperatur gehalten. Nach dieser Zeit war kein Isocyanat mehr nachweisbar. Mit 112 g Toluol wurde der Feststoffgehalt auf 70 Gew.% eingestellt.

Vernetzungsmittel A2:

680 g einer phenolischen Mannichbase nach dem Beispiel A1 wurden mit 19 g trimerisiertem Hexamethylendiisocyanat (0,1 mol NCO) und 0,5 g Dibutylzinndilaurat nach dem in A1 angegebenen Verfahren weiter umgesetzt. Mit 103 g Toluol wurde auf einen Feststoffgehalt von 70 Gew.% eingestellt.

Vernetzungsmittel A3:

680 g einer phenolischen Mannichbase nach dem Beispiel A1 wurden mit 158 g Phenylisocyanat und 0,5 g Dibutylzinndilaurat nach dem in A1 beschriebenen Verfahren weiter umgesetzt. Mit 163 g Toluol wurde auf einen Feststoffgehalt von 70 Gew.% eingestellt.

Vernetzungsmittel A4:

228 g Bisphenol A wurden mit 130 g Toluol, 258 g Dibutylamin und 70 g Paraformaldehyd 2 Stunden auf 80 °C erhitzt. Nach dieser Zeit wurde unter leichtem Vakuum das gebildete Reaktionswasser azeotrop abdestilliert. Das Produkt hatte einen Festkörpergehalt von 80 Gew.%. Bei 50 bis 60 °C wurden dazu 238 g Phenylisocyanat und 0,5 g Dibutylzinndilaurat gegeben und es wurde 2 Stunden bei dieser Temperatur gehalten. Nach dieser Zeit war kein Isocyanat mehr nachweisbar. Mit 195 g Toluol wurde auf einen Feststoffgehalt von 70 Gew.% eingestellt.

Vernetzungsmittel A5:

650 g einer phenolischen Mannichbase nach dem Beispiel A4 wurden mit 112 g Hexamethylendiisocyanat und 0,5 g Dibutylzinndilaurat nach dem in A1 angegebenen Verfahren weiter umgesetzt. Mit 140 g Toluol wurde auf einen Festkörpergehalt von 70 Gew.% eingestellt.

Als Vergleichsbeispiel wurde ein Vernetzungsmittel nach der EP-A 0 167 029, Beispiel B5, hergestellt.

Verwendung der erfindungsgemäßen Vernetzungsmittel am Beispiel der kathodischen Elektrotauchlackierung

Als geeignetes Lackharz wurde das in der EP-A 0 167 029 im Beispiel AI beschriebene Lackharz verwendet.
Die Herstellung der Elektrotauchbäder und die Applikation der Lackschicht erfolgte nach der in der angegebenen Patentschrift beschriebenen Weise, wobei das erfindungsgemäße Vernetzungsmittel als Komponente B verwendet wurde.

Technische Prüfung der eingebrannten Lackfilme

| Vernetzungsmittel | Verlauf | Kantenrost nach KWT | Erichsen-Tiefung | Schlagtiefung | Lösemittelbeständigkeit |
|---|---|---|---|---|---|
| A1 | 2-3 | 0 | 8.7 | >80 | 1-2 |
| A2 | 2 | 0 | 8.3 | >80 | 1-2 |
| A3 | 1 | 2 | 8.5 | >80 | 1-2 |
| A4 | 1-2 | 0 | 8.2 | 60 | 2 |
| A5 | 2-3 | 0 | 8.4 | 80 | 1- |
| Vergleich | 2 | 5 | 9.2 | >80 | 1-2 |

Benotung: Verlauf: Note 1 = sehr gut, Note 2 = gut, Note 3 = ausreichend

Kantenrost: Note 0 = kein Kantenrost, Note 5 = Lackschicht nahezu vollständig unterrostet

KWT = Klimawechseltest nach Prüfblatt VDA 621415

Lösemittelbeständigkeit: Note 1 = nicht angegriffen
Note 2 = leicht angegriffen

Benotung nach 100 Doppelhüben mit einem acetongetränkten Wattebausch

**Patentansprüche**

**Patentansprüche für folgende Vertragsstaaten : AT, BE, CH, DE, FR, GB, IT, LI, NL, SE**

**1.** Wärmereaktives Vernetzungsmittel für Lackharz-Bindemittel auf der Basis von phenolischen Mannichbasen, erhältlich durch Umsetzung von
A) einem Äquivalent eines mehrkernigen Polyphenols mit
B) 0,5 bis 2 Äquivalenten Formaldehyd oder einer Formaldehyd-liefernden Verbindung und
c) 0,5 bis 1 Äquivalent mindestens eines sekundären aliphatischen Amins,
Entfernung des Reaktionswassers und Umsetzung des entstandenen Reaktionsproduktes mit
D) 0,01 bis 1 Äquivalent eines mono- und/oder polyfunktionellen Isocyanats.

**2.** Vernetzungsmittel nach Anspruch 1 oder 2, erhältlich durch Verwendung einer Isocyanatverbindung D), die im Mittel 1 bis 4 Isocyanatgruppen pro Molekül enthält.

3. Vernetzungsmittel nach einem der Ansprüche 1 bis 3, erhältlich durch Verwendung von trimerisiertem Hexamethylendiisocyanat als Isocyanatverbindung D).

4. Überzugsmittel, enthaltend ein Vernetzungsmittel gemäß einem der Ansprüche 1 bis 4.

5. Überzugsmittel, enthaltend weitere Vernetzungsmittel neben dem Vernetzungsmittel gemäß einem der Ansprüche 1 bis 4.

6. Überzugsmittel, erhältlich durch partielle Umsetzung eines Vernetzungsmittels gemäß einem der Ansprüche 1 bis 4 mit einem Lackharz-Bindemittel.

7. Beschichteter Gegenstand, dessen wärmegehärteter überzug unter Verwendung eines Vernetzungsmittels gemäß einem der Ansprüche 1 bis 4 hergestellt wurde.

**Patentansprüche für folgenden Vertragsstaat : ES**

1. Verfahren zur Herstellung eines wärmeaktiven Vernetzungsmittels für Lackharzbindemittel auf der Basis von phenolischen Mannich-Basen, dadurch gekennzeichnet, daß man
   A) ein Äquivalent eines Polyphenols mit
   B) 0,5 bis 2 Äquivalenten Formaldehyd oder einer Formaldehyd lieferden Verbindung und
   C) 0,5 bis 1 Äquivalent mindestens eines sekundären aliphatischen Amins umsetzt,
   das Reaktionswasser entfernt und das so erhaltene Reaktionsprodukt mit
   D) 0,01 bis 1 Äquivalent mindestens eines mono- und/oder polyfunktionellen Isocyanats umsetzt.

2. Verfahren nach Anspruch 1, dadurch gekennzeichnet, daß man eine Isocyanatverbindung D verwendet, die im Mittel 1 bis 4 Isocyanatgruppen pro Molekül enthält.

3. Verfahren zur Herstellung eines Vernetzungsmittels gemäß Anspruch 1, dadurch gekennzeichnet, daß man als Isocyanatkomponente trimerisiertes Hexamethylendiisocyanat verwendet.

4. Verfahren zur Herstellung von wärmehärtbaren Überzügen, dadurch gekennzeichnet, daß man als Vernetzungsmittel Umsetzungsprodukte gemäß den Ansprüchen 1 bis 3 verwendet.

5. Verfahren zur Herstellung eines Elektrotauchlackierbades, dadurch gekennzeichnet, daß dieses Elektrotauchlackierbad neben Bindemitteln, weiteren Zusatzstoffen und Lackhilfsmitteln die Umsetzungsprodukte gemäß Anspruch 1 als Vernetzer enthält.

**Claims**

**Claims for the following Contracting States : AT, BE, CH, DE, FR, GB, IT, LI, NL, SE**

1. A heat-reactive crosslinking agent for surface coating binders which is based on a phenolic Mannich base, obtainable by reacting
   A) one equivalent of a polynuclear polyphenol with
   B) from 0.5 to 2 equivalents of formaldehyde or of a formaldehyde-donating compound and
   C) from 0.5 to 1 equivalent of one or more secondary aliphatic amines,
   removing the water of reaction and reacting the resulting reaction product with
   D) from 0.01 to 1 equivalent of a mono- and/or polyfunctional isocyanate.

2. A crosslinking agent as claimed in claim 1 or 2, obtainable by using an isocyanate compound D) which contains on average from 1 to 4 isocyanate groups per molecule.

3. A crosslinking agent as claimed in claim 1 or 2, obtainable by using trimerized hexamethylene diisocyanate as the isocyanate compound D).

4. A coating material containing a crosslinking agent as claimed in any of claims 1 to 3.

5. A coating material containing further crosslinking agents in addition to the crosslinking agent as claimed in any of claims 1 to 3.

6. A coating material obtainable by partially reacting a crosslinking agent as claimed in any of claims 1 to 3 with a surface coating binder.

7. A coated article whose heat-cured coating has been produced using a crosslinking agent as claimed in any of claims 1 to 3.

**Claims for the following Contracting State : ES**

1. A process for the preparation of a heat-reactive crosslinking agent for surface coating binders which is based on a phenolic Mannich base, which comprises reacting
   A) one equivalent of a polyphenol with
   B) from 0.5 to 2 equivalents of formaldehyde or of a formaldehyde-donating compound and
   C) from 0.5 to 1 equivalent of one or more secondary aliphatic amines,
   removing the water of reaction and reacting the resulting reaction product with
   D) from 0.01 to 1 equivalent of one or more mono-and/or polyfunctional isocyanates.

2. A process as claimed in claim 1, which comprises using an isocyanate compound D) which contains on average from 1 to 4 isocyanate groups per molecule.

3. A process for preparing a crosslinking agent as claimed in claim 1, which comprises using trimerized hexamethylene diisocyanate as the isocyanate component.

4. A process for the production of a heat-curable coating, wherein a reaction product as claimed in any of claims 1 to 3 is used as the crosslinking agent.

5. A process for the preparation of an electrocoating bath, wherein the said electrocoating bath contains a reaction product as claimed in claim 1 as a crosslinking agent, in addition to binders, further additives and coating assistants.

**Revendications**
**Revendications pour les Etats contractants suivants : AT, BE, CH, DE, FR, GB, IT, LI, NL, SE**

1. Agent de réticulation thermoréactif pour des liants de résines de peintures ou de laques à base de bases de Mannich phénoliques, que l'on peut obtenir par la réaction de
   A) un équivalent d'un polyphênol polycyclique avec
   B) 0,5 à 2 équivalents de formaldéhyde ou d'un composé donnant du formaldéhyde et
   C) 0,5 à 1 équivalent d'au moins une amine aliphatique secondaire,
   l'élimination de l'eau de réaction et la conversion du produit de réaction ainsi formé avec
   D) 0,01 à 1 équivalent d'un isocyanate mono- et/ou polyfonctionnel.

2. Agent de réticulation suivant la revendication 1, que l'on peut obtenir par l'emploi d'un composé du type isocyanate D), qui contient, en moyenne, de 1 à 4 radicaux isocyanate par molécule.

3. Agent de réticulation suivant l'une quelconque des revendications 1 et 2, que l'on peut obtenir par l'utilisation de diisocyanate d'hexaméthylène trimérisé à titre de composé du type isocyanate D).

4. Agent de revêtement contenant un agent de réticulation suivant l'une quelconque des revendications 1 à 3.

5. Agent de revêtement contenant d'autres agents de réticulation en plus de l'agent de réticulation suivant l'une quelconque des revendications 1 à 4.

6. Agent de réticulation que l'on peut obtenir par la réaction partielle d'un agent de réticulation suivant l'une quelconque des revendications 1 à 4 avec un liant pour résine de peinture ou de laque.

7. Objet revêtu dont le revêtement durcissable a été réalisé en recourant à l'emploi d'un agent de réticulation suivant l'une quelconque des revendications 1 à 4.

**Revendications pour l'Etat contractant suivant : ES**

1. Procédé de préparation d'un agent de réticulation thermoréactif pour des liants de résines de peintures ou de laques à base de bases de Mannich phénoliques, caractérisés en ce que l'on fait réagir
   A) un équivalent d'un polyphénol avec
   B) 0,5 à 2 équivalents de formaldéhyde ou d'un composé donnant du formaldéhyde et
   C) 0,5 à 1 équivalent d'au moins une amine aliphatique secondaire,
   on élimine l'eau de réaction et on convertit le produit de réaction ainsi obtenu avec
   D) 0,01 à 1 équivalent d'au moins un isocyanate monoet/ou polyfonctionnel.

2. Procédé suivant la revendication 1, caractérisé en ce que l'on utilise un composé du type isocyanate D qui contient, en moyenne, de 1 à 4 radicaux isocyanate par molécule.

3. Procédé de préparation d'un agent de réticulation suivant la revendication 1, caractérisé en ce que l'on utilise du diisocyanate d'hexaméthylène trimérisé à titre de composant du type isocyanate.

4. Procédé de préparation de revêtements thermodurcissables, caractérisé en ce que l'on utilise des produits de réaction suivant l'une quelconque des revendications 1 à 3 à titre d'agents de réticulation.

5. Procédé de préparation d'un bain de peinture ou de laquage par trempage électrophorétique ou cataphorèse, caractérisé en ce que le bain de peinture ou laquage par trempage électrophorétique contient, outre des liants, d'autres additifs et des adjuvants de peinture ou de laquage, les produits de réaction suivant la revendication 1 à titre d'agents de réticulation.